# EUROPEAN PATENT APPLICATION

(11) **EP 4 708 957 A1**
(43) Date of publication of application: **11.03.2026**
(21) Application number: 24806439.6
(22) Date of filing: 09.05.2024
(51) Int. Cl.: H04W 28/06

(54) **SDP INFORMATION PROCESSING METHOD AND APPARATUS, AND NETWORK ELEMENT**

(30) Priority: 12.05.2023 CN 202310536836
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: BAI, Xueqian, Beijing 100032 (CN); JIANG, Yi, Beijing 100032 (CN); SONG, Yue, Beijing 100032 (CN)
(74) Representative: GPI Brevets
(86) International application number: PCT/CN2024/091888
(87) International publication number: WO 2024/235087

(57) **Abstract**

A method and an apparatus for processing Session Description Protocol (SDP) information, and a network element are provided. The method includes: instructing, by a first network element according to first information and/or second information, a second network element to perform multiplexing and/or separating on the SDP information; wherein the first information is information indicating whether a first terminal and/or a first network supports a first capability; the second information is information related to a data channel stream and/or an application.

## Description

### CROSS-REFERENCE TO RELATED APPLICATION

The present application claims the priority to the Chinese patent application No. 202310536836.2 filed in China on May 12, 2023, a disclosure of which is incorporated herein by reference in its entirety.

### TECHNICAL FIELD

The present disclosure relates to the field of communication technology, and in particular, to a method and an apparatus for processing Session Description Protocol (SDP) information, and a network element.

### BACKGROUND

In known IP Multimedia Subsystem (IMS) technology, the Data Channel (DC) function is represented by the Data Channel Server (DCS), and a basic data channel establishment mechanism has been introduced.

Typical service use cases for new calls will involve the following scenarios.

Demultiplexing requirements: 1) when the DCS requires an Application Data Channel request to establish, for both network-to-terminal (e.g., Application-to-Person, A2P) and terminal-to-terminal (e.g., Pointer-to-Pointer, P2P), multiple Application Data Channels (ADC) simultaneously, if the terminal does not support the Session Description Protocol (SDP) multiplexing capability ((i.e., it cannot support carrying multiple a-lines within the same m-line), the SDP needs to be sent based on multiple different a-lines. Accordingly, a network side needs to perform demultiplexing processing on the m-lines in the SDP. 2) When a bootstrap data channel request contains multiple bootstrap data channel streams (e.g., a remote network initiates bootstrap data channel establishment to a local User Equipment (UE), while a local network also initiates bootstrap data channel establishment to a local UE (i.e., a terminal)), if the local UE does not support SDP multiplexing capability, the local network needs to place the a-lines for the multiple bootstrap data channel establishments into a separate m-line and send it to the UE.

Multiplexing requirements: 1) when one data channel Server requires an Application Data Channel request to establish, for both network-to-terminal (A2P) and terminal-to-terminal (P2P), multiple Application Data Channels (ADCs) simultaneously, if the request sent by a calling network contains multiple a-lines within the same m-line (indicating that the calling terminal supports SDP multiplexing), but a called terminal does not support SDP multiplexing (i.e., it does not support carrying multiple a-lines within the same m-line), the called network needs to perform demultiplexing processing on the m-lines in the SDP. 2) When a bootstrap data channel request contains multiple bootstrap data channel streams (e.g., a remote network initiates bootstrap data channel establishment to a User Equipment (UE), while a local network also initiates bootstrap data channel establishment to the local UE), if the local UE supports SDP multiplexing, the local network can place the a-lines for multiple bootstrap data channel establishments into the same m-line and send it to the UE, thereby conserving media resources for both the network and the terminal.

When an SDP request sent by a terminal contains multiple a-lines within a single m-line, and these a-lines are destined for different destination network elements, network functions, or addresses, the IMS network (media plane network elements or network functions) cannot perform routing because the port address is unique within each m-line. Additionally, an excessive number of m-lines can cause resource consumption on the terminal side and on the network side (as each m-line requires a corresponding link). Furthermore, deletion or release a single a-line requires deletion or release of a corresponding m-line, resulting in unnecessary resource wastage.

### SUMMARY

An objective of the embodiments of the present disclosure is to provide a method and an apparatus for processing Session Description Protocol (SDP) information, and a network element, so as to solve the problem in related art that an excessive number of m-lines may cause resource consumption on a terminal side and a network side.

To solve the above problem, an embodiment of the present disclosure provides a method for processing Session Description Protocol (SDP) information, the method including:
instructing, by a first network element according to first information and/or second information, a second network element to perform multiplexing and/or separating on the SDP information; wherein
the first information is information indicating whether a first terminal and/or a first network supports a first capability;
the second information is information related to a data channel stream and/or an application.

The information related to the data channel stream and/or the application includes:
that a destination of the data channel stream is the first terminal and/or a destination of the application is the first terminal; and/or
that there are multiple data channel streams and/or there are multiple applications.

The method further includes:
when the first terminal does not support the first capability and/or the first network supports the first capability, and/or the second information includes multiple data channel streams and/or multiple applications, instructing, by the first network element, the second network element to perform the separating.

The method further includes:
when the first terminal does not support the first capability and/or the first network supports the first capability, and/or a destination of the data channel stream and/or the application included in the second information is the first terminal, instructing, by the first network element, the second network element to perform the separating.

The method further includes:
when the first terminal and/or the first network supports the first capability, and/or the second information includes multiple data channel streams and/or multiple applications, instructing, by the first network element, the second network element to perform the multiplexing.

The method further includes:
when the first terminal and/or the first network supports the first capability, and/or a destination of the data channel stream and/or the application included in the second information is the first terminal, instructing, by the first network element, the second network element to perform the multiplexing.

A principle for the first network element to instruct the second network element to perform the multiplexing and/or separating is based on at least one of the following information:
an application identifier (ID);
Quality of Service (QoS) information of an application;
a destination endpoint and/or a source endpoint of an application, or stream, or data channel;
an endpoint type of an application, or stream, or data channel;
an application type;
an ID of the data channel; or
an ID of the data channel stream.

The method further includes:
when the first terminal and/or the first network supports the first capability, and the second information includes multiple data channel streams and/or the second information includes multiple applications, sending, through a first mode, the second information to the first terminal; wherein the first mode includes at least one of the followings:
one data channel media description;
one m-line;
one data channel; or
a multiplexing mode.

The method further includes:
receiving, by the first network element, the first information sent by a first terminal of a local network; or
receiving, by the first network element, the first information sent by a first terminal of a remote network.

In the case that the first network element receives the first information sent by the first terminal of the remote network, the first network element is a first network element of the remote network of the first terminal;
instructing, by the first network element according to the first information and/or the second information, the second network element to perform the multiplexing and/or separating on the SDP information, including:
instructing, by the first network element of the remote network of the first terminal, the second network element of the remote network to perform the multiplexing and/or separating on the SDP information according to the first information and/or the second information.

Instructing, by the first network element, the second network element to perform the multiplexing and/or separating on the SDP information, including:
instructing, by the first network element via a third network element, the second network element to perform the multiplexing and/or separating on the SDP information; or
instructing, by the first network element directly, the second network element to perform the multiplexing and/or separating on the SDP information.

The method further includes:
determining, by the first network element according to the first information and/or the second information, whether to perform the multiplexing and/or separating on the SDP information.

The first capability includes at least one of the followings:
a separating and/or multiplexing capability;
a capability to multiplex multiple applications into one data channel and/or one m-line and/or one data channel media description;
a capability to separate multiple applications into multiple data channels and/or multiple m-lines and/or multiple data channel media descriptions;
a capability to multiplex multiple data channel streams into one data channel and/or one m-line and/or one data channel media description; or
a capability to separate multiple data channel streams into multiple data channels and/or multiple m-lines and/or multiple data channel media descriptions.

The first information is obtained by at least one of the followings:
the first terminal reporting and/or indicating the first information to a network via a capability identifier during a registration process;
the first terminal reporting and/or indicating the first information to a network via a capability identifier during an Internet Protocol Multimedia Subsystem (IMS) session;
one m-line in the SDP information sent by the first terminal including multiple a-lines;
each m-line in the SDP information sent by the first terminal including only one a-line;
one data channel media description in the SDP information sent by the first terminal including multiple data channel streams and/or multiple applications;
each data channel media description in the SDP information sent by the first terminal including only one data channel stream and/or one application; or
the first terminal and/or the first network negotiating first information during a registration process.

The IMS session includes at least one of the followings:
a data channel establishment request;
a response to a data channel establishment request; or
a request message and/or a re-request message and/or a "183 session progress" message and/or a "200 OK" message and/or an SDP message.

The separating and/or multiplexing capability includes at least one of the followings:
an SDP separating and/or multiplexing capability;
a data channel separating and/or multiplexing capability;
a data channel stream separating and/or multiplexing capability;
an application separating and/or multiplexing capability;
an m-line separating and/or multiplexing capability; or
an a-line separating and/or multiplexing capability.

The second information is transmitted by at least one of the followings:
a request message and/or a re-request message and/or a "183 session progress" message and/or a "200 OK" message;
an SDP message;
a data channel establishment related message; or
an IMS session.

The principle for the first network element to instruct the second network element to perform the multiplexing includes one of the followings:
application identifiers of the applications are the same;
QoS information of the applications is the same;
destination endpoints and/or source endpoints of the applications, streams, or data channels are the same;
endpoint types of the applications, streams, or data channels are the same;
application types of the applications are the same;
IDs of the data channels are the same; or
IDs of the data channel streams are the same.

The principle for the first network element to instruct the second network element to perform the separating includes one of the followings:
application identifiers of the applications are different;
Quality of Service (QoS) information of the applications is different;
destination endpoints and/or source endpoints of the applications, streams, or data channels are different;
endpoint types of the applications, streams, or data channels are different;
application types of the applications are different;
IDs of the data channels are different; or
IDs of the data channel streams are different.

In the principle for the first network element to instruct the second network element to perform the multiplexing and/or separating, there are the multiple applications, and/or the multiple data channels, and/or the multiple data channel streams.

The SDP information includes at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

The present disclosure further provides a method for processing Session Description Protocol (SDP) information, including:
receiving, by a second network element from a first network element, an instruction for performing multiplexing and/or separating on the SDP information;
performing, by the second network element, the multiplexing and/or separating on the SDP information according to the instruction, and transmitting, by the second network element, the multiplexed and/or separated SDP information to a first terminal.

The SDP information includes at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

The present disclosure further provides an apparatus for processing SDP information, applied to a first network element, the apparatus further including:
an instruction module, configured to instruct, according to first information and/or second information, the second network element to perform multiplexing and/or separating on the SDP information; wherein
the first information is information indicating whether a first terminal and/or a first network supports a first capability;
the second information is information related to a data channel stream and/or an application.

An embodiment of the present disclosure further provides a first network element, including a processor and a transceiver, wherein the transceiver is configured to receive and send data under the control of the processor, wherein the processor is configured to perform the followings:
instructing, according to first information and/or second information, the second network element to perform multiplexing and/or separating on the SDP information; wherein
the first information is information indicating whether a first terminal and/or a first network supports a first capability;
the second information is information related to a data channel stream and/or an application.

The present disclosure further provides an apparatus for processing SDP information, applied to a second network element, the apparatus including:
a receiving module, configured to receive, from a first network element, an instruction for performing multiplexing and/or separating on the SDP information;
a processing and transmission module, configured to perform the multiplexing and/or separating on the SDP information according to the instruction, and transmit the multiplexed and/or separated SDP information to a first terminal.

An embodiment of the present disclosure further provides a second network element, including a processor and a transceiver, wherein the transceiver is configured to receive and send data under the control of the processor, wherein the processor is configured to perform the followings:
receiving, from a first network element, an instruction for performing multiplexing and/or separating on SDP information;
performing the multiplexing and/or separating on the SDP information according to the instruction, and transmitting the multiplexed and/or separated SDP information to a first terminal.

An embodiment of the present disclosure further provides a network element, including a memory, a processor, and a program stored on the memory and executable by the processor; wherein the processor is configured to execute the program to implement the above-described method for processing the SDP information.

The embodiment of the present disclosure further provides a computer-readable storage medium storing a computer program, wherein the program is used to be executed by a processor to implement the steps of the above-mentioned method for processing the SDP information.

The above technical solution of the present disclosure has at least the following beneficial effects.

In the method and apparatus for processing SDP information, and the network element according to the embodiments of the present disclosure, the first network element instructs the second network element to perform multiplexing and/or separating on the SDP information according to the first information and/or the second information. This consequently reduces the number of m-lines in the SDP information transmission process, thereby avoiding resource consumption on the terminal side and the network side and improving resource utilization efficiency. Furthermore, this indication enables the network to be compatible with the SDP multiplexing capability of the terminal, thereby increasing an establishment success rate of the bootstrap data channel and the application data channel.

### BRIEF DESCRIPTION OF THE DRAWINGS

FIG. 1 is a flowchart showing a step of the method for processing SDP information provided by an embodiment of the present disclosure;
FIG. 2 is a flowchart showing another step of the method for processing SDP information provided by an embodiment of the present disclosure;
FIG. 3 is a flowchart of Example 1 provided by an embodiment of the present disclosure;
FIG. 4 is a schematic interaction diagram of Example 2 provided in an embodiment of the present disclosure;
FIG. 5 is a schematic interaction diagram of Example 3 provided in an embodiment of the present disclosure;
FIG. 6 is a schematic interaction diagram of Example 4 provided in an embodiment of the present disclosure;
FIG. 7 is a schematic interaction diagram of Example 5 provided in an embodiment of the present disclosure;
FIG. 8 is a schematic interaction diagram of Example 6 provided in an embodiment of the present disclosure;
FIG. 9 is a schematic structural diagram of an apparatus for processing SDP information provided in an embodiment of the present disclosure;
FIG. 10 is a schematic structural diagram of a first network element provided in an embodiment of the present disclosure;
FIG. 11 is another schematic structural diagram of an apparatus for processing SDP information provided in an embodiment of the present disclosure;
FIG. 12 is a schematic structural diagram of a second network element provided in an embodiment of the present disclosure.

### DETAILED DESCRIPTION

To make the technical problems to be solved, technical solutions, and advantages of the present disclosure more clearly understood, the following detailed description will be provided with reference to the accompanying drawings and specific embodiments.

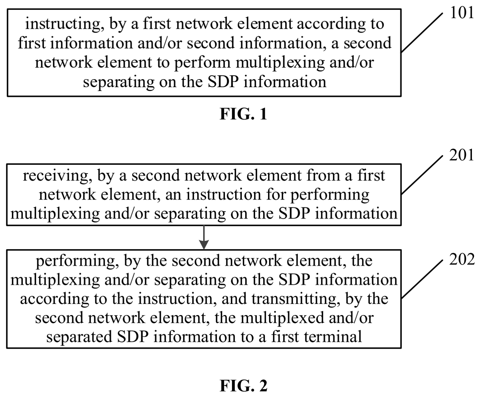

As shown in FIG. 1, an embodiment of the present disclosure provides a method for processing Session Description Protocol (SDP) information, the method including:
Step 101: instructing, by a first network element according to first information and/or second information, a second network element to perform multiplexing and/or separating on the SDP information; wherein
the first information is information indicating whether a first terminal and/or a first network supports a first capability;
the second information is information related to a data channel stream and/or an application.

Optionally, the first network is a registration or access network of the first terminal.

Optionally, the first terminal refers to a UE/mobile phone/user; it is not specifically limited herein.

Optionally, the first network element (or first network function) refers to a DCSF/ASF/USF/IMS AS/MMTEL AS/MRCF/DCCF, representing a data channel media control function; it is not specifically limited herein;
DCSF: Data Channel Signaling Function;
DCCF: Data Channel Control Function;
ASF: Application Signaling Function/Application Server Function;
USF: Unified Server Function or Unified Signaling Function;
IMS AS: Internet Protocol Multimedia Subsystem Application Server;
MMTEL AS: Multi-Media Telephony Application Server;
MRCF: Media Resource Control Function.

Optionally, the second network element is a DCMF/UMF/MRS/MF/CMF, which is not specifically limited herein;
DCMF: Data Channel Media Function;
UMF: Unified Media Function;
MRS: Media Repository Server;
MF: Media Function;
CMF: Converged Media Function.

Optionally, the third network element is an IMS AS/MMTEL AS, which is not specifically limited herein;
IMS AS: Internet Protocol Multimedia Subsystem Application Server;
MMTELAS: Multi-Media Telephony Application Server.

Optionally, the first network is a network where the UE is registered, and the first network may include the following network elements/functions:
a first network element, a second network element, and a third network element;
S-CSCF, namely Serving-Call Session Control Function;
P-CSCF, namely Proxy-Call Session Control Function.

Optionally, "multiplexing" can also be interpreted as: aggregating, convergence, merging, aggregating; this is not specifically limited herein.

Optionally, "separating" can also be understood as: diversion, demultiplexing, de-aggregation, and de-multiplexing; this is not specifically limited herein.

As an optional embodiment, the SDP information includes at least one of the followings:
media information of a Data Channel (DC);
a media description;
media description of a DC;
SDP offer;
SDP answer;
a data channel stream of a DC (bootstrap data channel stream and/or application data channel stream);
multiple applications;
an a-line; or
an m-line.

In at least one embodiment of the present disclosure, the information related to the data channel stream and/or the application includes:
that a destination of the data channel stream is the first terminal and/or a destination of the application is the first terminal; and/or
that there are multiple data channel streams and/or there are multiple applications.

As an optional embodiment, the method further includes:
when the first terminal does not support the first capability and/or the first network supports the first capability, and/or the second information includes multiple data channel streams and/or multiple applications, instructing, by the first network element, the second network element to perform the separating.

As another optional embodiment, the method further includes:
when the first terminal does not support the first capability and/or the first network supports the first capability, and/or a destination of the data channel stream and/or the application included in the second information is the first terminal, instructing, by the first network element, the second network element to perform the separating.

As yet another optional embodiment, the method further includes:
when the first terminal and/or the first network supports the first capability, and/or the second information includes multiple data channel streams and/or multiple applications, instructing, by the first network element, the second network element to perform the multiplexing.

As still yet another optional embodiment, the method further includes:
when the first terminal and/or the first network supports the first capability, and/or a destination of the data channel stream and/or the application included in the second information is the first terminal, instructing, by the first network element, the second network element to perform the multiplexing.

It should be noted that the destination of the above data channel stream and/or the destination of the application specifically refers to: a destination network element, or a destination node, or a destination endpoint, or a destination application server, which is not specifically limited herein.

In at least one embodiment of the present disclosure, a principle for the first network element to instruct the second network element to perform the multiplexing and/or separating is based on at least one of the following information:
an application identifier (ID);
Quality of Service (QoS) information of an application;
a destination endpoint and/or a source endpoint of an application, or stream, or data channel;
an endpoint type of an application, or stream, or data channel;
an application type;
an ID of the data channel; or
an ID of the data channel stream.

Optionally, the QoS information may be a QoS requirement for one data channel or one data channel stream. The same QoS information indicates the same QoS value (such as the same Quality of Service Class Identifier (QCI)/5G QoS Identifier (5QI)).

Optionally, the destination endpoint may be at least one of the followings:
1) the destination endpoint and/or destination network element and/or destination UE of the application data channel establishment request;
2) the destination endpoint and/or destination network element and/or destination UE of the bootstrap data channel establishment request;
3) the destination endpoint and/or destination network element and/or destination UE of the application.

Optionally, the application type may be at least one of the followings:
terminal-to-network (such as Person-to-Application (P2A), network-to-terminal (A2P), terminal-to-terminal (P2P), or terminal-to-network-to-terminal (P2A2P);
local or remote;
calling party or called party.

Optionally, the ID of the data channel may be at least one of the followings:
ID of the bootstrap data channel;
ID of the application data channel.

Optionally, the ID of the data channel stream may be at least one of the followings:
stream ID of the bootstrap data channel;
stream ID of the application data channel.

As an optional embodiment, the principle for the first network element to instruct the second network element to perform the multiplexing includes one of the followings:
application identifiers of the applications are the same;
QoS information of the applications is the same;
destination endpoints and/or source endpoints of the applications, streams, or data channels are the same;
endpoint types of the applications, streams, or data channels are the same;
application types of the applications are the same;
IDs of the data channels are the same; or
IDs of the data channel streams are the same.

Optionally, in the principle for the first network element to instruct the second network element to perform the multiplexing and/or separating, there are the multiple applications, and/or the multiple data channels, and/or the multiple data channel streams.

For example, when the first terminal and/or the first network does not support the first capability, and there are multiple m-lines in the SDP information with only one a-line in each m-line, and the destination of each a-line is the same, the first network element instructs the second network element to perform multiplexing.

As an optional embodiment, the principle for the first network element to instruct the second network element to perform the separating includes one of the followings:
application identifiers of the applications are different;
Quality of Service (QoS) information of the applications is different;
destination endpoints and/or source endpoints of the applications, streams, or data channels are different;
endpoint types of the applications, streams, or data channels are different;
application types of the applications are different;
IDs of the data channels are different; or
IDs of the data channel streams are different.

Optionally, in the principle for the first network element to instruct the second network element to perform the multiplexing and/or separating, there are the multiple applications, and/or the multiple data channels, and/or the multiple data channel streams.

For example, when the first terminal and/or the first network supports the first capability, and there are multiple m-lines in the SDP information with only one a-line in each m-line, and the destination of each a-line is different, the first network element instructs the second network element to perform separating.

In at least one embodiment of the present disclosure, the method further includes:
when the first terminal and/or the first network supports the first capability, and the second information includes multiple data channel streams and/or the second information includes multiple applications, sending, through a first mode, the second information to the first terminal; wherein the first mode includes at least one of the followings:
one data channel media description;
one m-line;
one data channel; or
a multiplexing mode.

Optionally, sending, through a first mode, the second information to other network elements.

It should be noted that, in the embodiments of the present disclosure, the first network element may be a first network element corresponding to a local network of the first terminal, or may be a first network element corresponding to a remote network of the first terminal. Accordingly, the method further includes:
in the case that the first network element is a first network element corresponding to a local network of the first terminal, receiving, by the first network element, the first information sent by a first terminal of a local network; or
in the case that the first network element is a first network element corresponding to a remote network of the first terminal, receiving, by the first network element, the first information sent by a first terminal of a remote network.

Optionally, the first terminal of the local network may send the first information directly to the first network element, or may send the first information to the first network element through another network element, which is not specifically limited herein.

As an optional embodiment, in the case that the first network element receives the first information sent by the first terminal of the remote network, the first network element is a first network element of the remote network of the first terminal;
instructing, by the first network element according to the first information and/or the second information, the second network element to perform the multiplexing and/or separating on the SDP information, including:
instructing, by the first network element of the remote network of the first terminal, the second network element of the remote network to perform the multiplexing and/or separating on the SDP information according to the first information and/or the second information.

In an optional embodiment of the present disclosure, instructing, by the first network element, the second network element to perform the multiplexing and/or separating on the SDP information, including:
instructing, by the first network element via a third network element, the second network element to perform the multiplexing and/or separating on the SDP information; or
instructing, by the first network element directly, the second network element to perform the multiplexing and/or separating on the SDP information.

In another optional embodiment of the present disclosure, before instructing, by the first network element, the second network element to perform the multiplexing and/or separating on the SDP information, the method further includes:
determining, by the first network element according to the first information and/or the second information, whether to perform the multiplexing and/or separating on the SDP information.

The principle for the first network element to instruct the second network element to perform the multiplexing is consistent with the description provided in the above example and will not be repeated herein.

As an optional embodiment, the first capability includes at least one of the followings:
a separating and/or multiplexing capability;
a capability to multiplex multiple applications into one data channel and/or one m-line and/or one data channel media description;
a capability to separate multiple applications into multiple data channels and/or multiple m-lines and/or multiple data channel media descriptions;
a capability to multiplex multiple data channel streams into one data channel and/or one m-line and/or one data channel media description; or
a capability to separate multiple data channel streams into multiple data channels and/or multiple m-lines and/or multiple data channel media descriptions.

The separating and/or multiplexing capability includes at least one of the followings:
an SDP separating and/or multiplexing capability;
a data channel separating and/or multiplexing capability;
a data channel stream separating and/or multiplexing capability;
an application separating and/or multiplexing capability;
an m-line separating and/or multiplexing capability; or
an a-line separating and/or multiplexing capability.

In at least one embodiment of the present disclosure, the first information is obtained by at least one of the followings:
the first terminal reporting and/or indicating the first information to a network via a capability identifier during a registration process;
the first terminal reporting and/or indicating the first information to a network via a capability identifier during an Internet Protocol Multimedia Subsystem (IMS) session;
one m-line in the SDP information sent by the first terminal including multiple a-lines;
each m-line in the SDP information sent by the first terminal including only one a-line;
one data channel media description in the SDP information sent by the first terminal including multiple data channel streams and/or multiple applications;
each data channel media description in the SDP information sent by the first terminal including only one data channel stream and/or one application; or
the first terminal and/or the first network negotiating first information during a registration process.

The IMS session includes at least one of the followings:
a data channel establishment request;
a response to a data channel establishment request; or
a request message and/or a re-request message and/or a "183 session progress" message and/or a "200 OK" message and/or SDP information.

In at least one embodiment of the present disclosure, the second information is transmitted by at least one of the followings:
a request message and/or a re-request message and/or a "183 session progress" message and/or a "200 OK" message;
SDP information;
a data channel establishment related message; or
an IMS session.

It should be noted that, in addition to being sent by other network elements, the second information may also be generated by the first network element and/or the second network element in combination with the received SDP information. That is, the second information includes: a part of the DC streams and/or applications included in the received SDP, and a part of the DC streams and/or applications generated by the second network element itself. This is not specifically limited herein.

In summary, in the embodiments of the present disclosure, the first network element instructs the second network element to perform multiplexing and/or separating on the SDP information according to the first information and/or the second information. This consequently reduces the number of m-lines in the SDP information transmission process, thereby avoiding resource consumption on the terminal side and the network side and improving resource utilization efficiency.

As shown in FIG. 2, an embodiment of the present disclosure further provides a method for processing Session Description Protocol (SDP) information, the method including:
step 201: receiving, by a second network element from a first network element, an instruction for performing multiplexing and/or separating on the SDP information;
step 202: performing, by the second network element, the multiplexing and/or separating on the SDP information according to the instruction, and transmitting, by the second network element, the multiplexed and/or separated SDP information to a first terminal.

As an optional embodiment, the SDP information includes at least one of the followings:
media information of a Data Channel (DC);
a media description;
media description of a DC;
SDP offer;
SDP answer;
a data channel stream of a DC(bootstrap data channel stream and/or application data channel stream);
multiple applications;
an a-line; or
an m-line.

Optionally, the first network is a registration or access network of the first terminal.

Optionally, the first terminal refers to a UE/mobile phone/user; it is not specifically limited herein.

Optionally, the first network element (or first network function) refers to a DCSF/ASF/USF/IMS AS/MMTEL AS/MRCF/DCCF, representing a data channel media control function; it is not specifically limited herein;
DCSF: Data Channel Signaling Function;
DCCF: Data Channel Control Function;
ASF: Application Signaling Function/Application Server Function;
USF: Unified Server Function or Unified Signaling Function;
IMS AS: Internet Protocol Multimedia Subsystem Application Server;
MMTEL AS: Multi-Media Telephony Application Server;
MRCF: Media Resource Control Function.

Optionally, the second network element is a DCMF/UMF/MRS/MF/CMF, which is not specifically limited herein;
DCMF: Data Channel Media Function;
UMF: Unified Media Function;
MRS: Media Repository Server;
MF: Media Function;
CMF: Converged Media Function.

Optionally, the first network is a network where the UE is registered, and the first network may include the following network elements/functions:
a first network element, a second network element, and a third network element;
Serving-Call Session Control Function (S-CSCF);
Proxy-Call Session Control Function (P-CSCF).

Optionally, the third network element is an IMS AS/MMTEL AS, which is not specifically limited herein;
IMS AS: Internet Protocol Multimedia Subsystem Application Server;
MMTELAS: Multi-Media Telephony Application Server.

Optionally, "multiplexing" can also be interpreted as: aggregating, convergence, merging, aggregating; this is not specifically limited herein.

Optionally, "separating" can also be understood as: diversion, demultiplexing, de-aggregation, and de-multiplexing; this is not specifically limited herein.

In summary, in the embodiments of the present disclosure, the first network element instructs the second network element to perform multiplexing and/or separating on the SDP information according to the first information and/or the second information. This consequently reduces the number of m-lines in the SDP information transmission process, thereby avoiding resource consumption on the terminal side and the network side and improving resource utilization efficiency.

To more clearly describe the method for processing SDP information provided by the embodiments of the present disclosure, several examples are provided below for illustration.

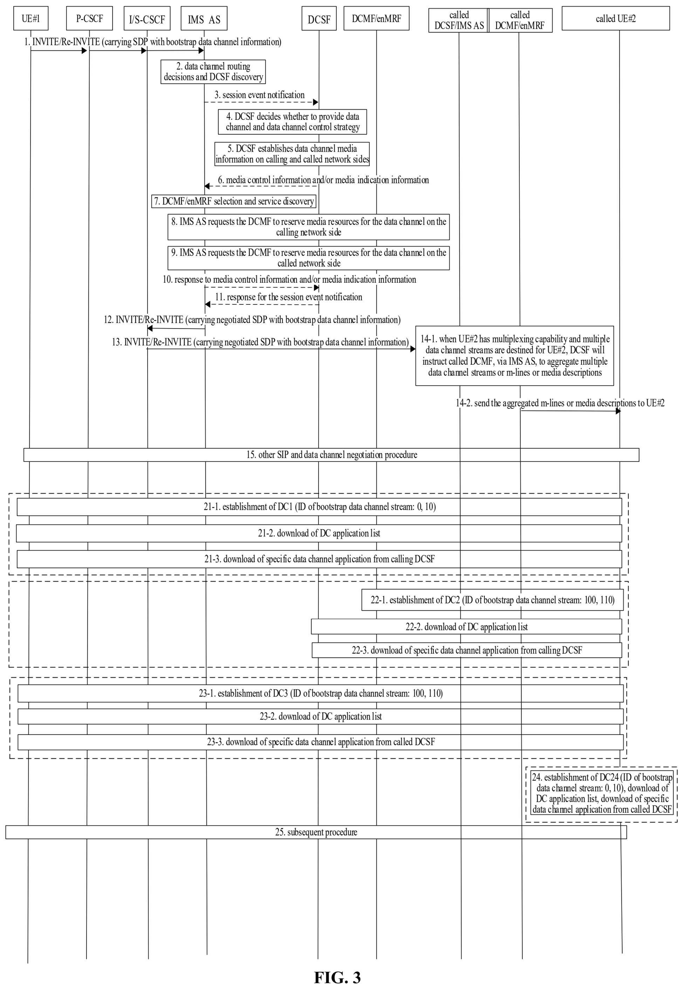

Example 1: the IMS call flow shown in FIG. 3 is as follows_{∘}

Sep 1: a UE#1 sends a request or re-request (INVITE/Re-INVITE), carrying the SDP with the bootstrap data channel information.

Step 2: the IMS AS performs data channel routing decisions and DCSF discovery.

Step 3: the IMS AS sends a session event notification to the DCSF.

Step 4: the DCSF decides whether to provide one data channel and the data channel control strategy.

Step 5: the DCSF establishes data channel media information on the calling and called network sides.

Step 6: the DCSF sends media control information and/or media indication information to the IMS AS.

Step 7: the IMS AS performs the DCMF/enhanced Media Resource Function (enMRF) or MRF selection and service discovery with data channel capability.

Step 8: the IMS AS requests the DCMF to reserve media resources for the data channel on the calling network side.

Step 9: the IMS AS requests the DCMF to reserve media resources for the data channel on the called network side.

Step 10: the IMS AS sends a response to the DCSF with media control information and/or media indication information.

Step 11: the DCSF sends a response to the IMS AS for the session event notification.

Step 12: the IMS AS sends an INVITE/Re-INVITE carrying the negotiated SDP with bootstrap data channel information to the I/S-CSCF; the I-CSCF is the Interrogating Call Session Control Function, and the S-CSCF is the Serving Call Session Control Function.

Step 13: the I/S-CSCF sends an INVITE/Re-INVITE carrying the negotiated SDP with the bootstrap data channel information to the called DCSF/IMS AS.

Step 14-1: when a UE#2 has the multiplexing capability and multiple data channel streams are destined for the UE#2, the DCSF will instruct the called DCMF, via the IMS AS, to aggregate the multiple data channel streams or m-lines or media descriptions.

Step 14-2: the called DCMF/enMRF sends the aggregated m-lines or media descriptions to the UE#2.

Step 15: other Session Initialization Protocol (SIP) and data channel negotiation procedures.

Step 21-1: establishment of the DC1 (the ID of the bootstrap data channel stream: 0, 10).

Step 21-2: download of the DC application list.

Step 21-3: download of a specific data channel application from the calling DCSF.

Step 22-1: establishment of the DC2 (the ID of the bootstrap data channel stream: 100, 110).

Step 22-2: download of the DC application list.

Step 22-3: download of a specific data channel application from the calling DCSF.

Step 23-1: establishment of the DC3 (the ID of the bootstrap data channel stream: 100, 110).

Step 23-2: download of the DC application list.

Step 23-3: download of a specific data channel application from the called DCSF.

Step 24: establishment of the DC24 (the ID of the bootstrap data channel stream: 0, 10), download of the DC application list, and download of a specific data channel applications from the called DCSF.

Step 25: subsequent steps, which are not specifically defined herein.

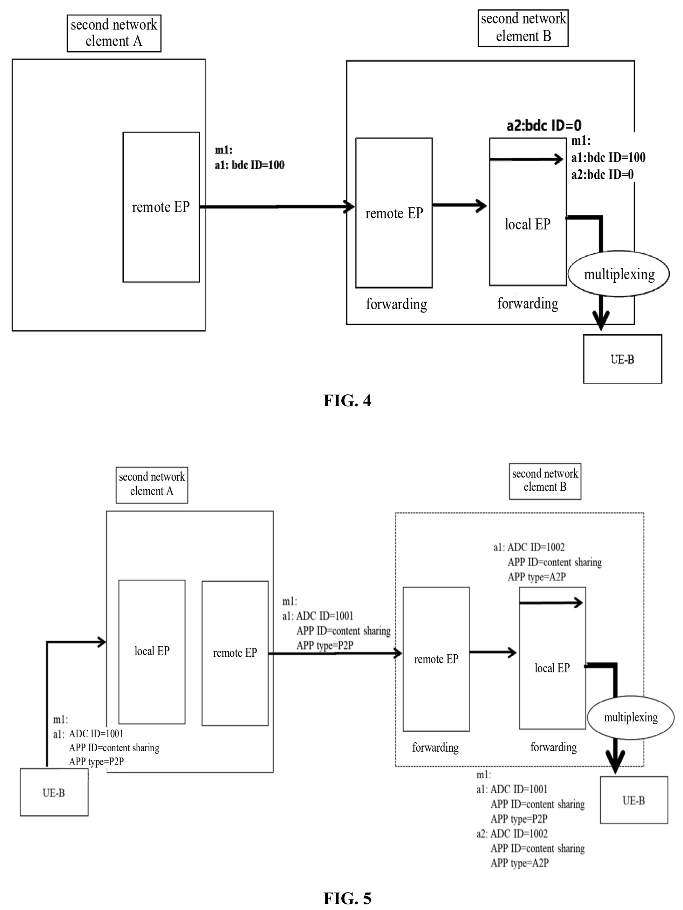

Example 2: as shown in FIG. 4, when a UE B (i.e., the first terminal) supports multiplexing:
the second network element B receives the SDP information sent by the second network element A (the second network element in the remote network). The SDP information includes one m1-line, which includes one a1-line. The ID of the bootstrap data channel (bdc) of the a1-line is 100;
the second network element B also has a local second SDP that needs to be sent to the UE B. The SDP includes one a2-line, and the ID of the bootstrap data channel (bdc) of the a1-line is 0;
in the case that the UE B supports the multiplexing function, the second network element multiplexes the a1-line and the a2-line into the ml-line and sends it to the UE B.

Example 3: as shown in FIG. 5, when a UE B (i.e., the first terminal) supports multiplexing:
the UE B sends a first SDP information to the second network element A. The first SDP information includes one m1-line, which includes one a1-line. In the a1-line, the ID of the Application Data Channel (ADC) is 1001, APP ID=content sharing, and APP type=P2P;
the second network element A sends the first SDP information to the second network element B;
the second network element B also has a local second SDP that needs to be sent to the UE B. The second SDP includes one m1-line, which includes one a1-line. In the a1-line, the ID of the ADC is 1002, the APP ID=content sharing, and the APP type=A2P;
in the case that the UE B supports the multiplexing function, the second network element multiplexes the two a1-lines into the m1-line and sends it to the UE B.

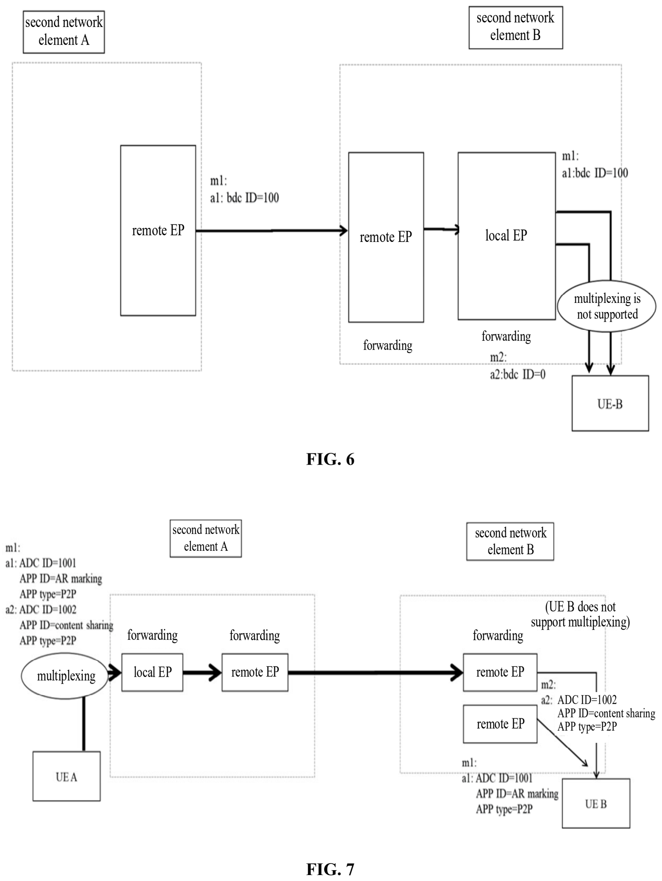

Example 4: as shown in FIG. 6, when a UE B (i.e., the first terminal) does not support multiplexing:
the second network element B receives the SDP information sent by the second network element A (the second network element in the remote network). The SDP information includes one m1-line, which includes one a1-line. The ID of the bootstrap data channel (bdc) of the a1-line is 100;
the second network element B has SDP information that needs to be sent to the UE B. The SDP includes one m2 line, which includes one a2-line. The ID of the bootstrap data channel (bdc) of the a1-line is 0;
in the case that the UE B does not support the multiplexing function, the second network element sends the m1-line and the m2 line to the UE B separately.

Example 5: as shown in FIG. 7, when a UE B (i.e., the first terminal) does not support multiplexing:
the UE B sends a first SDP information to the second network element A. The first SDP information includes one m1-line, which includes one a1-line and one a2-line. In the a1-line, the ID of the Application Data Channel (ADC) is 1001, APP ID=AR marking, APP type=P2P; in the a2-line, the ID of the ADC is 1002, APP ID=content sharing, APP type=P2P;
the second network element A sends the first SDP information to the second network element B;
in the case that the UE B does not support the multiplexing function, the second network element B separates the first SDP information into two m-lines, namely, line m1 and line m2, and transmits them to the UE B.

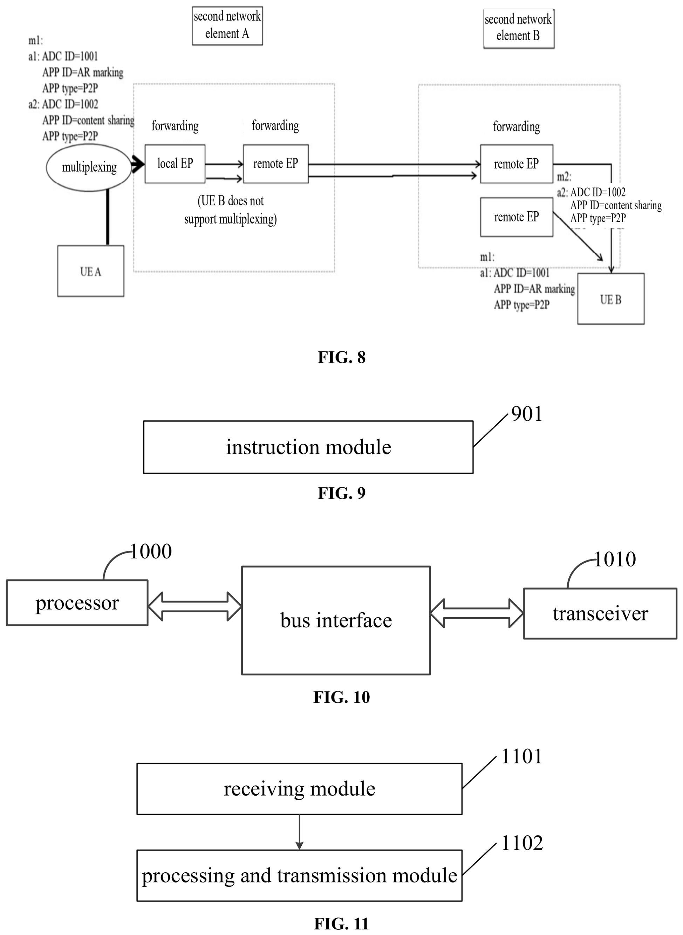

Example 6: as shown in FIG. 8, when a UE B (i.e., the first terminal) does not support multiplexing:
the UE B sends a first SDP information to the second network element A. The first SDP information includes one m1-line, which includes one a1-line and one a2-line. In the a1-line, the ID of the Application Data Channel (ADC) is 1001, APP ID=AR marking, APP type=P2P; in the a2-line, the ID of the ADC is 1002, APP ID=content sharing, APP type=P2P;
the second network element A learns in advance that the UE B does not support the multiplexing function; the second network element A separates the first SDP information into two m-lines, namely, line m1 and line m2, and transmits them to the second network element B;
the second network element B directly transmits the m1-line and the m2 line to the UE B.

As shown in FIG. 9, an embodiment of the present disclosure further provides an apparatus for processing SDP information, which is applied to a first network element. The apparatus further includes:
an instruction module 901, configured to instruct, according to first information and/or second information, the second network element to perform multiplexing and/or separating on the SDP information; wherein
the first information is information indicating whether a first terminal and/or a first network supports a first capability;
the second information is information related to a data channel stream and/or an application.

As an optional embodiment, the information related to the data channel stream and/or the application includes:
that a destination of the data channel stream is the first terminal and/or a destination of the application is the first terminal; and/or
that there are multiple data channel streams and/or there are multiple applications.

As an optional embodiment, the instruction module is further configured to:
when the first terminal does not support the first capability and/or the first network supports the first capability, and/or the second information includes multiple data channel streams and/or multiple applications, instruct the second network element to perform the separating.

As an optional embodiment, the instruction module is further configured to:
when the first terminal does not support the first capability and/or the first network supports the first capability, and/or a destination of the data channel stream and/or the application included in the second information is the first terminal, instruct the second network element to perform the separating.

As an optional embodiment, the instruction module is further configured to:
when the first terminal and/or the first network supports the first capability, and/or the second information includes multiple data channel streams and/or multiple applications, instruct the second network element to perform the multiplexing.

As an optional embodiment, the instruction module is further configured to:
when the first terminal and/or the first network supports the first capability, and/or a destination of the data channel stream and/or the application included in the second information is the first terminal, instruct the second network element to perform the multiplexing.

As an optional embodiment, a principle for the first network element to instruct the second network element to perform the multiplexing and/or separating is based on at least one of the following information:
an application identifier (ID);
Quality of Service (QoS) information of an application;
a destination endpoint and/or a source endpoint of an application, or stream, or data channel;
an endpoint type of an application, or stream, or data channel;
an application type;
an ID of the data channel; or
an ID of the data channel stream.

As an optional embodiment, the apparatus further includes:
a sending module, configured to, when the first terminal and/or the first network supports the first capability, and the second information includes multiple data channel streams and/or the second information includes multiple applications, send, through a first mode, the second information to the first terminal; wherein the first mode includes at least one of the followings:
one data channel media description;
one m-line;
one data channel; or
a multiplexing mode.

As an optional embodiment, the apparatus further includes:
an information receiving module, configured to receive the first information sent by a first terminal of a local network; or
receive the first information sent by a first terminal of a remote network.

As an optional embodiment, in the case that the first network element receives the first information sent by the first terminal of the remote network, the first network element is a first network element of the remote network of the first terminal;
the instruction module is further configured to:
instruct, by the first network element of the remote network of the first terminal, the second network element of the remote network to perform the multiplexing and/or separating on the SDP information according to the first information and/or the second information.

As an optional embodiment, instructing, by the first network element, the second network element to perform the multiplexing and/or separating on the SDP information, including:
instructing, by the first network element via a third network element, the second network element to perform the multiplexing and/or separating on the SDP information; or
instructing, by the first network element directly, the second network element to perform the multiplexing and/or separating on the SDP information.

As an optional embodiment, the apparatus further includes:
a determination module, configured to determine, according to the first information and/or the second information, whether to perform the multiplexing and/or separating on the SDP information.

As an optional embodiment, the first capability includes at least one of the followings:
a separating and/or multiplexing capability;
a capability to multiplex multiple applications into one data channel and/or one m-line and/or one data channel media description;
a capability to separate multiple applications into multiple data channels and/or multiple m-lines and/or multiple data channel media descriptions;
a capability to multiplex multiple data channel streams into one data channel and/or one m-line and/or one data channel media description; or
a capability to separate multiple data channel streams into multiple data channels and/or multiple m-lines and/or multiple data channel media descriptions.

As an optional embodiment, the first information is obtained by at least one of the followings:
the first terminal reporting and/or indicating the first information to a network via a capability identifier during a registration process;
the first terminal reporting and/or indicating the first information to a network via a capability identifier during an Internet Protocol Multimedia Subsystem (IMS) session;
one m-line in the SDP information sent by the first terminal including multiple a-lines;
each m-line in the SDP information sent by the first terminal including only one a-line;
one data channel media description in the SDP information sent by the first terminal including multiple data channel streams and/or multiple applications;
each data channel media description in the SDP information sent by the first terminal including only one data channel stream and/or one application; or
the first terminal and/or the first network negotiating first information during a registration process.

As an optional embodiment, the IMS session includes at least one of the followings:
a data channel establishment request;
a response to a data channel establishment request; or
a request message and/or a re-request message and/or a "183 session progress" message and/or a "200 OK" message and/or an SDP message.

As an optional embodiment, the separating and/or multiplexing capability includes at least one of the followings:
an SDP separating and/or multiplexing capability;
a data channel separating and/or multiplexing capability;
a data channel stream separating and/or multiplexing capability;
an application separating and/or multiplexing capability;
an m-line separating and/or multiplexing capability; or
an a-line separating and/or multiplexing capability.

As an optional embodiment, the second information is transmitted by at least one of the followings:
a request message and/or a re-request message and/or a "183 session progress" message and/or a "200 OK" message;
an SDP message;
a data channel establishment related message; or
an IMS session.

As an optional embodiment, the principle for the first network element to instruct the second network element to perform the multiplexing includes one of the followings:
application identifiers of the applications are the same;
QoS information of the applications is the same;
destination endpoints and/or source endpoints of the applications, streams, or data channels are the same;
endpoint types of the applications, streams, or data channels are the same;
application types of the applications are the same;
IDs of the data channels are the same; or
IDs of the data channel streams are the same.

As an optional embodiment, the principle for the first network element to instruct the second network element to perform the separating includes one of the followings:
application identifiers of the applications are different;
Quality of Service (QoS) information of the applications is different;
destination endpoints and/or source endpoints of the applications, streams, or data channels are different;
endpoint types of the applications, streams, or data channels are different;
application types of the applications are different;
IDs of the data channels are different; or
IDs of the data channel streams are different.

As an optional embodiment, in the principle for the first network element to instruct the second network element to perform the multiplexing and/or separating, there are the multiple applications, and/or the multiple data channels, and/or the multiple data channel streams.

As an optional embodiment, the SDP information includes at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

In the embodiments of the present disclosure, the first network element instructs the second network element to perform multiplexing and/or separating on the SDP information according to the first information and/or the second information. This consequently reduces the number of m-lines in the SDP information transmission process, thereby avoiding resource consumption on the terminal side and the network side and improving resource utilization efficiency.

It should be noted that the apparatus for processing SDP information provided in the embodiments of the present disclosure is an apparatus capable of executing the above-mentioned method for processing SDP information. Therefore, all embodiments of the above-mentioned method for processing SDP information are applicable to the apparatus and can achieve the same or similar beneficial effects, and are not specifically limited herein.

As shown in FIG. 10, an embodiment of the present disclosure further provides a first network element, including a processor 1000 and a transceiver 1010, wherein the transceiver is configured to receive and send data under the control of the processor, wherein the processor is configured to perform the followings:
instructing, according to first information and/or second information, the second network element to perform multiplexing and/or separating on the SDP information; wherein
the first information is information indicating whether a first terminal and/or a first network supports a first capability;
the second information is information related to a data channel stream and/or an application.

As an optional embodiment, the information related to the data channel stream and/or the application includes:
that a destination of the data channel stream is the first terminal and/or a destination of the application is the first terminal; and/or
that there are multiple data channel streams and/or there are multiple applications.

As an optional embodiment, the processor is further configured to perform the followings:
when the first terminal does not support the first capability and/or the first network supports the first capability, and/or the second information includes multiple data channel streams and/or multiple applications, instructing, by the first network element, the second network element to perform the separating.

As an optional embodiment, the processor is further configured to perform the followings:
when the first terminal does not support the first capability and/or the first network supports the first capability, and/or a destination of the data channel stream and/or the application included in the second information is the first terminal, instructing, by the first network element, the second network element to perform the separating.

As an optional embodiment, the processor is further configured to perform the followings:
when the first terminal and/or the first network supports the first capability, and/or the second information includes multiple data channel streams and/or multiple applications, instructing, by the first network element, the second network element to perform the multiplexing.

As an optional embodiment, the processor is further configured to perform the followings:
when the first terminal and/or the first network supports the first capability, and/or a destination of the data channel stream and/or the application included in the second information is the first terminal, instructing, by the first network element, the second network element to perform the multiplexing.

As an optional embodiment, a principle for the first network element to instruct the second network element to perform the multiplexing and/or separating is based on at least one of the following information:
an application identifier (ID);
Quality of Service (QoS) information of an application;
a destination endpoint and/or a source endpoint of an application, or stream, or data channel;
an endpoint type of an application, or stream, or data channel;
an application type;
an ID of the data channel; or
an ID of the data channel stream.

As an optional embodiment, the processor is further configured to perform the followings:
when the first terminal and/or the first network supports the first capability, and the second information includes multiple data channel streams and/or the second information includes multiple applications, sending, through a first mode, the second information to the first terminal; wherein the first mode includes at least one of the followings:
one data channel media description;
one m-line;
one data channel; or
a multiplexing mode.

As an optional embodiment, the processor is further configured to perform the followings:
receiving, by the first network element, the first information sent by a first terminal of a local network; or
receiving, by the first network element, the first information sent by a first terminal of a remote network.

As an optional embodiment, in the case that the first network element receives the first information sent by the first terminal of the remote network, the first network element is a first network element of the remote network of the first terminal;
instructing, by the first network element according to the first information and/or the second information, the second network element to perform the multiplexing and/or separating on the SDP information, including:
instructing, by the first network element of the remote network of the first terminal, the second network element of the remote network to perform the multiplexing and/or separating on the SDP information according to the first information and/or the second information.

As an optional embodiment, the processor is further configured to perform the followings:
instructing, by the first network element via a third network element, the second network element to perform the multiplexing and/or separating on the SDP information; or
instructing, by the first network element directly, the second network element to perform the multiplexing and/or separating on the SDP information.

As an optional embodiment, the processor is further configured to perform the followings:
determining, by the first network element according to the first information and/or the second information, whether to perform the multiplexing and/or separating on the SDP information.

As an optional embodiment, the first capability includes at least one of the followings:
a separating and/or multiplexing capability;
a capability to multiplex multiple applications into one data channel and/or one m-line and/or one data channel media description;
a capability to separate multiple applications into multiple data channels and/or multiple m-lines and/or multiple data channel media descriptions;
a capability to multiplex multiple data channel streams into one data channel and/or one m-line and/or one data channel media description; or
a capability to separate multiple data channel streams into multiple data channels and/or multiple m-lines and/or multiple data channel media descriptions.

As an optional embodiment, the first information is obtained by at least one of the followings:
the first terminal reporting and/or indicating the first information to a network via a capability identifier during a registration process;
the first terminal reporting and/or indicating the first information to a network via a capability identifier during an Internet Protocol Multimedia Subsystem (IMS) session;
one m-line in the SDP information sent by the first terminal including multiple a-lines;
each m-line in the SDP information sent by the first terminal including only one a-line;
one data channel media description in the SDP information sent by the first terminal including multiple data channel streams and/or multiple applications;
each data channel media description in the SDP information sent by the first terminal including only one data channel stream and/or one application; or
the first terminal and/or the first network negotiating first information during a registration process.

As an optional embodiment, the IMS session includes at least one of the followings:
a data channel establishment request;
a response to a data channel establishment request; or
a request message and/or a re-request message and/or a "183 session progress" message and/or a "200 OK" message and/or an SDP message.

As an optional embodiment, the separating and/or multiplexing capability includes at least one of the followings:
an SDP separating and/or multiplexing capability;
a data channel separating and/or multiplexing capability;
a data channel stream separating and/or multiplexing capability;
an application separating and/or multiplexing capability;
an m-line separating and/or multiplexing capability; or
an a-line separating and/or multiplexing capability.

As an optional embodiment, the second information is transmitted by at least one of the followings:
a request message and/or a re-request message and/or a "183 session progress" message and/or a "200 OK" message;
an SDP message;
a data channel establishment related message; or
an IMS session.

As an optional embodiment, the principle for the first network element to instruct the second network element to perform the multiplexing includes one of the followings:
application identifiers of the applications are the same;
QoS information of the applications is the same;
destination endpoints and/or source endpoints of the applications, streams, or data channels are the same;
endpoint types of the applications, streams, or data channels are the same;
application types of the applications are the same;
IDs of the data channels are the same; or
IDs of the data channel streams are the same.

As an optional embodiment, the principle for the first network element to instruct the second network element to perform the separating includes one of the followings:
application identifiers of the applications are different;
Quality of Service (QoS) information of the applications is different;
destination endpoints and/or source endpoints of the applications, streams, or data channels are different;
endpoint types of the applications, streams, or data channels are different;
application types of the applications are different;
IDs of the data channels are different; or
IDs of the data channel streams are different.

As an optional embodiment, in the principle for the first network element to instruct the second network element to perform the multiplexing and/or separating, there are the multiple applications, and/or the multiple data channels, and/or the multiple data channel streams.

As an optional embodiment, the SDP information includes at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

In the embodiments of the present disclosure, the first network element instructs the second network element to perform multiplexing and/or separating on the SDP information according to the first information and/or the second information. This consequently reduces the number of m-lines in the SDP information transmission process, thereby avoiding resource consumption on the terminal side and the network side and improving resource utilization efficiency.

It should be noted that the first network element provided in the embodiments of the present disclosure is a network element capable of executing the above-mentioned method for processing SDP information. Therefore, all embodiments of the above-mentioned method for processing the SDP information are applicable to the network element and can achieve the same or similar beneficial effects, and are not specifically limited herein.

As shown in FIG. 11, an embodiment of the present disclosure further provides an apparatus for processing SDP information, which is applied to a second network element. The apparatus includes:
a receiving module 1101, configured to receive, from a first network element, an instruction for performing multiplexing and/or separating on the SDP information;
a processing and transmission module 1102, configured to perform the multiplexing and/or separating on the SDP information according to the instruction, and transmit the multiplexed and/or separated SDP information to a first terminal.

As an optional embodiment, the SDP information includes at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

In the embodiments of the present disclosure, the first network element instructs the second network element to perform multiplexing and/or separating on the SDP information according to the first information and/or the second information. This consequently reduces the number of m-lines in the SDP information transmission process, thereby avoiding resource consumption on the terminal side and the network side and improving resource utilization efficiency.

It should be noted that the apparatus for processing SDP information provided in the embodiments of the present disclosure is an apparatus capable of executing the above-mentioned method for processing SDP information. Therefore, all embodiments of the above-mentioned method for processing SDP information are applicable to this apparatus and can achieve the same or similar beneficial effects, and are not specifically limited herein.

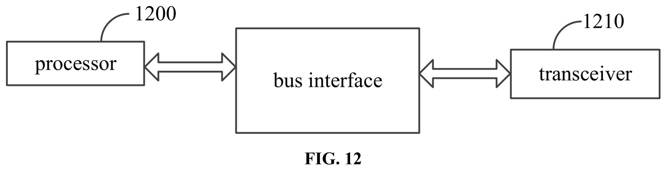

As shown in FIG. 12, an embodiment of the present disclosure further provides a second network element, including a processor 1200 and a transceiver 1210, wherein the transceiver 1210 is configured to receive and send data under the control of the processor 1200, wherein the processor 1200 is configured to perform the followings:
receiving, from a first network element, an instruction for performing multiplexing and/or separating on SDP information;
performing the multiplexing and/or separating on the SDP information according to the instruction, and transmitting the multiplexed and/or separated SDP information to a first terminal.

As an optional embodiment, the SDP information includes at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

In the embodiment of the present disclosure, the first network element instructs the second network element to perform multiplexing and/or separating on the SDP information according to the first information and/or the second information. This consequently reduces the number of m-lines in the SDP information transmission process, thereby avoiding resource consumption on the terminal side and the network side and improving resource utilization efficiency.

It should be noted that the first network element provided in the embodiments of the present disclosure is a network element capable of executing the above-mentioned method for processing SDP information. All embodiments of the above-mentioned method for processing SDP information are applicable to this network element and can achieve the same or similar beneficial effects, and are not specifically limited herein.

An embodiment of the present disclosure further provides a network element, which is a first network element or a second network element. The network element includes a memory, a processor, and a computer program stored on the memory and executable by the processor. The processor is configured to execute the program to implement all the processes in the embodiments of the method for processing SDP information described above and can achieve the same technical effects. To avoid repetition, it will not be redundantly described herein.

The present disclosure further provides a computer-readable storage medium storing a computer program. The program is used to be executed by a processor to implement all the processes in the embodiments of the method for processing SDP information described above and can achieve the same technical effects. To avoid repetition, it will not be redundantly described herein. The computer-readable storage medium may include, for example, a Read-Only Memory (ROM), a Random Access Memory (RAM), a magnetic disk, an optical disc, and the like.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-readable storage media (including, but not limited to, magnetic disk storage, optical storage, and the like) including computer-usable program codes.

The present disclosure has been described with reference to flow diagrams and/or block diagrams of methods, devices (systems), and computer program products according to the embodiments of the present disclosure. It will be understood that each flow and/or block of the flow diagrams and/or block diagrams, and combinations of flows and/or blocks in the flow diagrams and/or block diagrams, can be implemented by computer program instructions. These computer program instructions may be provided to a processor of a general purpose computer, special purpose computer, embedded processor, or other programmable data processing device to produce a machine, such that the instructions, which are executed via the processor of the computer or other programmable data processing device, create means for implementing the functions specified in the flow or flows of the flow diagram and/or block or blocks of the block diagram.

These computer program instructions may also be stored in a computer-readable storage that can direct a computer or other programmable data processing device to function in a particular manner, such that the instructions stored in the computer-readable storage produce an article of manufacture including instruction means which implement the function specified in the flow or flows of the flow diagram and/or block or blocks of the block diagram.

The computer program instructions may also be loaded onto a computer or other programmable data processing device to cause a series of operational steps to be performed on the computer or other programmable device to produce a computer-implemented process such that the instructions which are executed on the computer or other programmable device provide steps for implementing the functions specified in the flow or flows of the flow diagram and/or block or blocks of the block diagram.

The above are preferred embodiments of the present disclosure. It should be noted that, for those of ordinary skill in the art, improvements and modifications can be made without departing from the principles of the present disclosure. These improvements and modifications shall also be considered within the protection scope of the present disclosure.

## Claims

1. A method for processing Session Description Protocol (SDP) information, comprising:
instructing, by a first network element according to first information and/or second information, a second network element to perform multiplexing and/or separating on the SDP information; wherein
the first information is information indicating whether a first terminal and/or a first network supports a first capability;
the second information is information related to a data channel stream and/or an application.

2. The method according to claim 1, wherein the information related to the data channel stream and/or the application comprises:
that a destination of the data channel stream is the first terminal and/or a destination of the application is the first terminal; and/or
that there are multiple data channel streams and/or there are multiple applications.

3. The method according to claim 1, further comprising:
when the first terminal does not support the first capability and/or the first network supports the first capability, and/or the second information comprises multiple data channel streams and/or multiple applications, instructing, by the first network element, the second network element to perform the separating.

4. The method according to claim 1, further comprising:
when the first terminal does not support the first capability and/or the first network supports the first capability, and/or a destination of the data channel stream and/or the application comprised in the second information is the first terminal, instructing, by the first network element, the second network element to perform the separating.

5. The method according to claim 1, further comprising:
when the first terminal and/or the first network supports the first capability, and/or the second information comprises multiple data channel streams and/or multiple applications, instructing, by the first network element, the second network element to perform the multiplexing.

6. The method according to claim 1, further comprising:
when the first terminal and/or the first network supports the first capability, and/or a destination of the data channel stream and/or the application comprised in the second information is the first terminal, instructing, by the first network element, the second network element to perform the multiplexing.

7. The method according to any one of claims 1 to 6, wherein a principle for the first network element to instruct the second network element to perform the multiplexing and/or separating is based on at least one of the following information:
an application identifier (ID);
Quality of Service (QoS) information of an application;
a destination endpoint and/or a source endpoint of an application, or stream, or data channel;
an endpoint type of an application, or stream, or data channel;
an application type;
an ID of the data channel ; or
an ID of the data channel stream.

8. The method according to claim 1, further comprising:
when the first terminal and/or the first network supports the first capability, and the second information comprises multiple data channel streams and/or the second information comprises multiple applications, sending, through a first mode, the second information to the first terminal; wherein the first mode comprises at least one of the followings:
one data channel media description;
one m-line;
one data channel; or
a multiplexing mode.

9. The method according to claim 1, further comprising:
receiving, by the first network element, the first information sent by a first terminal of a local network; or
receiving, by the first network element, the first information sent by a first terminal of a remote network.

10. The method according to claim 9, wherein, in the case that the first network element receives the first information sent by the first terminal of the remote network, the first network element is a first network element of the remote network of the first terminal;
instructing, by the first network element according to the first information and/or the second information, the second network element to perform the multiplexing and/or separating on the SDP information, comprising:
instructing, by the first network element of the remote network of the first terminal, the second network element of the remote network to perform the multiplexing and/or separating on the SDP information according to the first information and/or the second information.

11. The method according to claim 1, wherein instructing, by the first network element, the second network element to perform the multiplexing and/or separating on the SDP information, comprising:
instructing, by the first network element via a third network element, the second network element to perform the multiplexing and/or separating on the SDP information; or
instructing, by the first network element directly, the second network element to perform the multiplexing and/or separating on the SDP information.

12. The method according to any one of claims 1 to 6, further comprising:
determining, by the first network element according to the first information and/or the second information, whether to perform the multiplexing and/or separating on the SDP information.

13. The method according to any one of claims 1 to 6, wherein the first capability comprises at least one of the followings:
a separating and/or multiplexing capability;
a capability to multiplex multiple applications into one data channel and/or one m-line and/or one data channel media description;
a capability to separate multiple applications into multiple data channels and/or multiple m-lines and/or multiple data channel media descriptions;
a capability to multiplex multiple data channel streams into one data channel and/or one m-line and/or one data channel media description; or
a capability to separate multiple data channel streams into multiple data channels and/or multiple m-lines and/or multiple data channel media descriptions.

14. The method according to claim 1, wherein the first information is obtained by at least one of the followings:
the first terminal reporting and/or indicating the first information to a network via a capability identifier during a registration process;
the first terminal reporting and/or indicating the first information to a network via a capability identifier during an Internet Protocol Multimedia Subsystem (IMS) session;
one m-line in the SDP information sent by the first terminal comprising multiple a-lines;
each m-line in the SDP information sent by the first terminal comprising only one a-line;
one data channel media description in the SDP information sent by the first terminal comprising multiple data channel streams and/or multiple applications;
each data channel media description in the SDP information sent by the first terminal comprising only one data channel stream and/or one application; or
the first terminal and/or the first network negotiating first information during a registration process.

15. The method according to claim 14, wherein the IMS session comprises at least one of the followings:
a data channel establishment request;
a response to a data channel establishment request; or
a request message and/or a re-request message and/or a "183 session progress" message and/or a "200 OK" message and/or an SDP message.

16. The method according to claim 13, wherein the separating and/or multiplexing capability comprises at least one of the followings:
an SDP separating and/or multiplexing capability;
a data channel separating and/or multiplexing capability;
a data channel stream separating and/or multiplexing capability;
an application separating and/or multiplexing capability;
an m-line separating and/or multiplexing capability; or
an a-line separating and/or multiplexing capability.

17. The method according to claim 1, wherein the second information is transmitted by at least one of the followings:
a request message and/or a re-request message and/or a "183 session progress" message and/or a "200 OK" message;
an SDP message;
a data channel establishment related message; or
an IMS session.

18. The method according to claim 7, wherein the principle for the first network element to instruct the second network element to perform the multiplexing comprises one of the followings:
application identifiers of the applications are the same;
QoS information of the applications is the same;
destination endpoints and/or source endpoints of the applications, streams, or data channels are the same;
endpoint types of the applications, streams, or data channels are the same;
application types of the applications are the same;
IDs of the data channels are the same; or
IDs of the data channel streams are the same.

19. The method according to claim 7, wherein the principle for the first network element to instruct the second network element to perform the separating comprises one of the followings:
application identifiers of the applications are different;
Quality of Service (QoS) information of the applications is different;
destination endpoints and/or source endpoints of the applications, streams, or data channels are different;
endpoint types of the applications, streams, or data channels are different;
application types of the applications are different;
IDs of the data channels are different; or
IDs of the data channel streams are different.

20. The method according to claim 18 or 19, wherein in the principle for the first network element to instruct the second network element to perform the multiplexing and/or separating, there are the multiple applications, and/or the multiple data channels, and/or the multiple data channel streams.

21. The method according to claim 1, wherein the SDP information comprises at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

22. A method for processing Session Description Protocol (SDP) information, comprising:
receiving, by a second network element from a first network element, an instruction for performing multiplexing and/or separating on the SDP information;
performing, by the second network element, the multiplexing and/or separating on the SDP information according to the instruction, and transmitting, by the second network element, the multiplexed and/or separated SDP information to a first terminal.

23. The method according to claim 22, wherein the SDP information comprises at least one of the followings:
media information of a Data Channel (DC);
a media description;
media description of a DC;
SDP offer;
SDP answer;
a data channel stream;
a data channel stream of a DC;
multiple applications;
an a-line; or
an m-line.

24. An apparatus for processing SDP information, applied to a first network element, the apparatus further comprising:
an instruction module, configured to instruct, according to first information and/or second information, the second network element to perform multiplexing and/or separating on the SDP information; wherein
the first information is information indicating whether a first terminal and/or a first network supports a first capability;
the second information is information related to a data channel stream and/or an application.

25. A first network element, comprising a processor and a transceiver, wherein the transceiver is configured to receive and send data under the control of the processor, wherein the processor is configured to perform the followings:
instructing, according to first information and/or second information, the second network element to perform multiplexing and/or separating on the SDP information; wherein
the first information is information indicating whether a first terminal and/or a first network supports a first capability;
the second information is information related to a data channel stream and/or an application.

26. An apparatus for processing SDP information, applied to a second network element, the apparatus comprising:
a receiving module, configured to receive, from a first network element, an instruction for performing multiplexing and/or separating on the SDP information;
a processing and transmission module, configured to perform the multiplexing and/or separating on the SDP information according to the instruction, and transmit the multiplexed and/or separated SDP information to a first terminal.

27. A second network element, comprising a processor and a transceiver, wherein the transceiver is configured to receive and send data under the control of the processor, wherein the processor is configured to perform the followings:
receiving, from a first network element, an instruction for performing multiplexing and/or separating on SDP information;
performing the multiplexing and/or separating on the SDP information according to the instruction, and transmitting the multiplexed and/or separated SDP information to a first terminal.

28. A network element, comprising a memory, a processor, and a program stored on the memory and executable by the processor; wherein the processor is configured to execute the program to implement the method for processing the SDP information according to any one of claims 1 to 23, or the processor is configured to execute the program to implement the method for processing the SDP information according to claim 24 or 25.

29. A computer-readable storage medium storing a computer program, wherein the program is used to be executed by a processor to implement the steps of the method for processing the SDP information according to any one of claims 1 to 23, or the program is used to be executed by a processor to implement the steps of the method for processing the SDP information according to claim 24 or 25.
